(19) Europäisches Patentamt / European Patent Office / Office européen des brevets

(11) **EP 1 328 084 B1**

(12) **FASCICULE DE BREVET EUROPEEN**

(45) Date de publication et mention
de la délivrance du brevet:
**26.03.2008 Bulletin 2008/13**

(51) Int Cl.:
*H04L 12/24* (2006.01)

(21) Numéro de dépôt: **02293115.8**

(22) Date de dépôt: **17.12.2002**

(54) **Détermination de la cause d'une dégradation de la qualité d'un service en fonction de l'évolution d'un ensemble de services**

Bestimmung der Ursache einer Degradation der Qualität eines Dienstes in Abhängigkeit von der Evolution einer Gruppe von Diensten

Determination of the cause of degradation of the quality of a service based on the evolution of a set of services

(84) Etats contractants désignés:
**AT BE BG CH CY CZ DE DK EE ES FI FR GB GR IE IT LI LU MC NL PT SE SI SK TR**

(30) Priorité: **14.01.2002 FR 0200370**

(43) Date de publication de la demande:
**16.07.2003 Bulletin 2003/29**

(73) Titulaire: **Alcatel Lucent**
**75008 Paris (FR)**

(72) Inventeurs:
 • **Papini, Hélène**
 **91400 Orsay (FR)**
 • **Martinot, Olivier**
 **91210 Draveil (FR)**

(74) Mandataire: **Chaffraix, Sylvain et al**
**Alcatel Lucent**
**Intellectual Property & Standards**
**54 rue La Boétie**
**75008 Paris (FR)**

(56) Documents cités:
**WO-A-00/72183       US-A- 5 488 715**

• **JIANN-LIANG CHEN ET AL: "A fuzzy expert system for network fault management" SYSTEMS, MAN AND CYBERNETICS, 1996., IEEE INTERNATIONAL CONFERENCE ON BEIJING, CHINA 14-17 OCT. 1996, NEW YORK, NY, USA, IEEE, US, 14 octobre 1996 (1996-10-14), pages 328-331, XP010206647 ISBN: 0-7803-3280-6**
• **KUBO K ET AL: "A METHOD OF EXTRACTING MANAGEMENT INFORMATION FOR SERVICE MANAGEMENT" NTT REVIEW, TELECOMMUNICATIONS ASSOCIATION, TOKYO, JP, vol. 10, no. 2, 1 mars 1998 (1998-03-01), pages 63-68, XP000740456 ISSN: 0915-2334**
• **CHI-CHUN LO ET AL: "Coding-based schemes for fault identification in communication networks" MILITARY COMMUNICATIONS CONFERENCE PROCEEDINGS, 1999. MILCOM 1999. IEEE ATLANTIC CITY, NJ, USA 31 OCT.-3 NOV. 1999, PISCATAWAY, NJ, USA,IEEE, US, 31 octobre 1999 (1999-10-31), pages 915-919, XP010369795 ISBN: 0-7803-5538-5**

**Description**

La présente invention est relative à la gestion des services fournis par un réseau de télécommunication. Plus précisément, elle concerne la supervision de la qualité de tels services.

Ces services peuvent être des services de transmission multimédia sur des réseaux de données, classiquement appelés « voix sur IP (Internet Protocol) » ou VoIP (*Voice over IP*), permettant la transmission de vidéos, de sons..., des services de multi-conférence, etc.

Ces services, ainsi que ceux encore à venir, nécessitent des hautes qualités de service. Différents critères de qualité existent, dont l'importance varie en fonction du type de service : débit, perte de paquets, gigue entre les paquets etc.

Ces critères de qualité peuvent faire l'objet d'un contrat passé entre l'opérateur d'un réseau de télécommunication et ses clients (par exemple des fournisseurs de services). Ce contrat est habituellement appelé SLA pour *Service Level Agreement,* en anglais (Accord, ou contrat, de niveau service).

Une faute sur un élément de réseau, une congestion sur une liaison entre noeuds de réseau ou à l'intérieur d'un noeud de réseau, etc. peuvent avoir un impact sur la qualité d'un ou plusieurs services.

Une baisse de la qualité de service peut avoir un fort impact commercial dans la mesure où il peut impacter la satisfaction du client, voir aller à l'encontre de l'accord SLA qui avait été négocié.

Il est donc important, pour un opérateur, de disposer d'un système de gestion de services capable de déterminer le plus tôt possible, la cause de la baisse de la qualité d'un service. Ceci permet à l'opérateur (ou au système de gestion de services lui-même) de pouvoir réagir au plus tôt, en reconfigurant le réseau de télécommunication, en réparant l'élément de réseau fautif, en déclenchant des clauses contractuelles négociées avec le client (réduction de la prestation facturée, par exemple) etc.

Les solutions de l'état de la technique se basent sur la collecte d'alarmes provenant du réseau. En effet, une faute d'un élément de réseau, une congestion etc. doivent générer un flot d'alarmes provenant des éléments de réseau concernés à destination d'un système de gestion de réseau. Les éléments de réseau peuvent être de nature diverse. Notamment il peut s'agir de noeuds de réseau (commutateur, routeur, etc.) ou des liens entre noeuds de réseau.

Ce système de gestion de réseau coopère avec le système de gestion de service.

Une corrélation est alors faite pour trier ce flot d'alarmes et en déduire la cause de la diminution de la qualité d'un service.

Toutefois, les alarmes à traiter sont excessivement nombreuses. Le temps de traitement est alors trop important pour permettre une réaction du système de gestion de service dans un temps acceptable. Pendant le temps de traitement, en effet, la diminution de la qualité peut empirer jusqu'à sortir des limites imposées par le contrat SLA.

Le document WO 00/72183 montre un tel système.

Le but de la présente invention est de proposer une solution plus efficace au problème de la détection des causes d'une diminution de la qualité d'un service. Pour ce faire, l'invention a pour objet un système de gestion de services pour déterminer un ensemble d'éléments de réseau étant cause possible d'une dégradation de la qualité d'au moins un service. Ce système se caractérise en ce qu'il comporte des moyens pour déterminer la qualité d'autres services, et des moyens pour déterminer cet ensemble en fonction :

- De la qualité de ces autres services, et,
- Des éléments de réseau mettant en oeuvre ces autres services.

Selon une mise en oeuvre de l'invention, les éléments de réseau de l'ensemble déterminé sont associés à des probabilités d'être cause de la dégradation de la qualité du service.

Pour chaque élément de réseau, la probabilité peut être déterminée en fonction du rapport entre la somme des degrés de dégradation des services mettant en oeuvre cet élément de réseau.

Chaque service peut être associé à un contrat de niveau de service, ce degré valant 1, si le contrat de niveau de service n'est pas satisfait, et 0 dans le cas contraire.

L'invention et ses avantages apparaîtront de façon plus claire dans la description de mises en oeuvre qui va suivre, en liaison avec les figures annexées.

La figure 1 illustre comme exemple de mise en oeuvre de l'invention, un réseau de télécommunication sur lequel 2 services ont été mis en oeuvre.

La figure 2 illustre comme un second exemple, le même réseau de télécommunication sur lequel 3 services ont été mis en oeuvre.

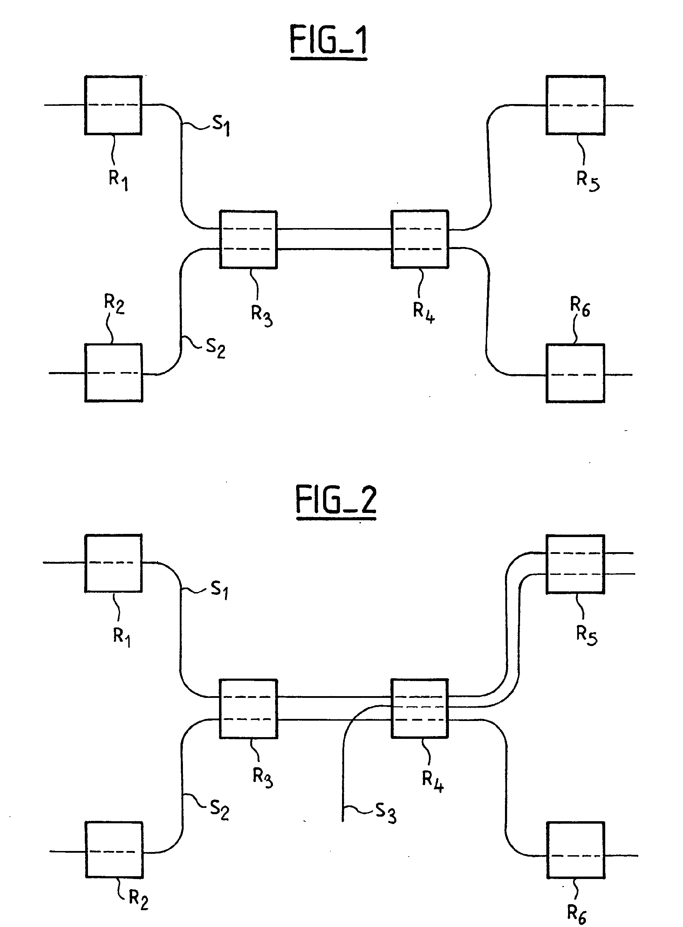

Le réseau de télécommunication illustré par la figure 1 comporte 6 noeuds de réseau $R_1$ à $R_6$. Sur ces 6 noeuds de réseau, 2 services $S_1$ et $S_2$ sont mis en oeuvre. Le service $S_1$ met en oeuvre les noeuds de réseau $R_1$, $R_3$, $R_4$ et $R_5$. Le service $S_2$ met en oeuvre les noeuds de réseau $R_2$, $R_3$, $R_4$ et $R_6$.

A titre d'exemple, on suppose que le système de gestion de service a détecté une dégradation de la qualité pour le service $S_1$. Dans la situation où le service est associé à un contrat de niveau de service (SLA), cette dégradation peut par exemple être matérialisée par la violation de celui-ci. Mais il peut aussi s'agir d'une simple diminution de la qualité, n'allant pas jusqu'à la violation du SLA.

Le système de gestion de service cherche alors à déterminer un ensemble d'éléments de réseau étant cause possible de cette dégradation. Dans le cas idéal, cet ensemble est réduit à un singleton. Dans le cas général, le système de gestion de service obtient un ensemble non réduit à un singleton. Il est aussi possible de prévoir d'associer à chaque élément de réseau de cet ensemble, une probabilité d'être cause de la dégradation.

Pour ce faire, le système de gestion de service possède des moyens pour déterminer la qualité d'autres services.

Dans l'exemple illustré par la figure 1, il y a un unique autre service $S_2$. On suppose que la qualité de ce service $S_2$ est aussi dégradée.

Le système de gestion de service possède des moyens pour déterminer l'ensemble d'éléments de réseau étant cause possible de la dégradation, en fonction de la qualité de ce service $S_2$ et des éléments le mettant en oeuvre.

Sachant que le service $S_2$ met en oeuvre deux noeuds de réseau $R_3$ et $R_4$ qui sont aussi mis en oeuvre par le service $S_1$ et que ces deux services sont dégradés, le système de gestion de réseau peut déterminer que ces deux noeuds de réseau forment l'ensemble des éléments de réseau étant cause possible de la dégradation.

En pratique, cette détermination peut être effectuée de différentes façons.

Une première façon peut consister à simplement calculer pour chaque élément de réseau, le rapport entre le nombre de services dégradés qu'il met en oeuvre, et le nombre total de services dégradés au sein du réseau. Comme dit précédemment, une approximation du nombre de services dégradés peut être obtenue en considérant le nombre de SLA violés.

Dans l'exemple de la figure 1, ce rapport vaut 0.5 pour les noeuds de réseau $R_1$, $R_2$, $R_5$ et $R_6$, et 1 pour les éléments de réseau $R_3$ et $R_4$.

L'ensemble recherché est formé des éléments (ici, des noeuds) de réseau pour lesquels ce rapport est le plus élevé, ici $R_3$ et $R_4$.

Une deuxième façon de faire consiste à considérer qu'il existe une graduation dans la façon dont un service peut être dégradé.

Le système de gestion de service calcule alors, pour chaque élément de réseau, une valeur V défini

$$\text{par } V = \sum_i p_i, \text{ où } P_i \text{ est le degré de dégradation du}$$

service $S_i$ mettant en oeuvre l'élément de réseau concerné.

Le calcul de ce degré de dégradation p; peut dépendre de la définition de la notion de qualité pour ce service. Dans la situation où un accord de niveau service SLA a été associé à ce service, il peut donc dépendre des paramètres contenus dans cet accord.

Par exemple, si le SLA contient deux contraintes, l'une concernant le débit moyen, l'autre concernant un taux de perte des paquets transmis, il peut être prévu d'établir une priorité entre ces deux contraintes, de sorte que la dégradation de l'une ou l'autre de ces contraintes peut résulter sur un degré de dégradation différent. Ce mécanisme permet donc de rendre compte de l'impact des différentes caractéristiques d'un service, et des *desiderata* des clients.

Là encore, l'ensemble recherché est formé des éléments de réseau pour lesquels cette valeur est la plus élevée.

La figure 2 illustre un autre exemple d'application de l'invention. Par rapport à l'exemple de la figure 1, un troisième service $S_3$ a été ajouté. Ce service met en oeuvre les noeuds de réseau $R_4$ et $R_5$.

On considère que le service $S_3$ n'est pas dégradé.

Le système de gestion de service peut utiliser cette information afin d'aider à la détermination de l'ensemble des éléments de réseau étant cause possible de la dégradation de la qualité du service $S_1$, c'est-à-dire à réduire la cardinalité de cet ensemble.

Pour ce faire, un mode de réalisation consiste à procéder de même que précédemment mais en comptabilisant aussi les services non dégradés et en leur impactant un poids négatif.

Par exemple, le système de gestion de service peut calculer, pour chaque élément de réseau, la différence entre le nombre de services dégradés le mettant en oeuvre, et le nombre de services non dégradés le mettant en oeuvre. L'ensemble recherché est encore une fois, formé des éléments de réseau pour lesquels cette valeur est la plus élevée.

Dans l'exemple de la figure 2, on obtient une valeur de 0 pour le noeud de réseau $R_5$ (1 service dégradé et 1 service non dégradé), une valeur de 1 pour les noeuds de réseau $R_1$, $R_2$ et $R_6$, et une valeur de 2 pour le noeud de réseau $R_3$.

L'ensemble recherché est donc formé uniquement du noeud $R_3$.

Selon une mise en oeuvre de l'invention, l'ensemble recherché peut ne pas être formé uniquement des éléments de réseau possédant la valeur la plus élevée, mais aussi de ceux dont la valeur est supérieure à un certain seuil.

Ceci permet une plus grande tolérance aux erreurs, bien que susceptible d'accroître la cardinalité de l'ensemble recherché.

Ces exemples de mise en oeuvre de l'invention sont illustrés avec des noeuds de réseau. Il est toutefois important de noter que l'invention peut s'appliquer de la même façon à tout autre type d'équipement de réseau et notamment aux liens entre noeuds de réseau. Le système de gestion de services selon l'invention est donc aussi capable de déterminer un ensemble de liens entre noeuds de réseau, étant cause possible d'une dégradation de la qualité d'un (ou plusieurs) service.

## Revendications

1. Système de gestion de services pour déterminer un ensemble d'éléments de réseau étant cause possible d'une dégradation de la qualité d'au moins un service, **caractérisé en ce qu**'il comporte des moyens pour déterminer la qualité d'autres services, et des moyens pour déterminer ledit ensemble en fonction :

    • De la qualité desdits autres services, et,
    • Des éléments de réseau mettant en oeuvre lesdits autres services.

**2.** Système de gestion de services selon la revendication 1, dans lequel les éléments de réseau dudit ensemble sont associés à des probabilités d'être cause de la dégradation de la qualité dudit service.

**3.** Système de gestion selon la revendication précédente, dans lequel pour chaque élément de réseau, la probabilité est déterminée en fonction du rapport entre la somme des degrés de dégradation des services mettant en oeuvre ledit élément de réseau.

**4.** Système de gestion selon la revendication précédente, dans lequel chaque service est associé à un contrat de niveau de service, ledit degré valant 1, si ledit contrat de niveau de service n'est pas satisfait, et 0 dans le cas contraire.

## Claims

**1.** Service management system for determining a set of network elements constituting a possible cause of degraded quality of one or more services, said system being **characterized in that** it comprises means for determining the quality of other services and means for determining said set as a function of:

    - the quality of said other services, and
    - network elements utilizing said other services.

**2.** Service management system according to claim 1 wherein the network elements of said set are associated with probabilities of being the cause of the degraded quality of said service.

**3.** Service management system according to the preceding claim wherein the probability for each network element is determined as a function of the ratio between the sum of the degrees to which services utilizing said network element are degraded.

**4.** Service management system according to the preceding claim wherein each service is associated with a service level agreement and said degree has the value 1 if said service level agreement is not complied with and 0 otherwise.

**Patentansprüche**

**1.** Diensteverwaltungssystem zur Bestimmung einer Menge von Netzelementen, die eine mögliche Ursache einer Degradation der Güte von mindestens einem Dienst sind, **dadurch gekennzeichnet, dass** es Mittel umfasst, um die Güte anderer Dienste zu bestimmen, sowie Mittel, um diese Menge zu bestimmen in Abhängigkeit:

    * von der Güte dieser anderen Dienste; und
    * von den Netzelementen, weiche diese anderen Dienste implementieren.

**2.** Diensteverwaltungssystem nach Anspruch 1, bei dem die Netzelemente dieser Menge Wahrscheinlichkeiten zugeordnet sind, dass sie die Ursache für die Degradation der Güte des Dienstes sein können.

**3.** Verwaltungssystem nach dem vorhergehenden Anspruch, bei dem für jedes Netzelement die Wahrscheinlichkeit in Abhängigkeit vom Verhältnis zwischen der Summe der Degradationsgrade der Dienste bestimmt wird, welche dieses Netzelement einsetzen.

**4.** Verwaltungssystem nach dem vorhergehenden Anspruch, bei dem jeder Dienst einem Service Level Agreement zugeordnet ist, wobei der Grad gleich 1 ist, wenn das Service Level Agreement nicht erfüllt wird, und 0 im gegenteiligen Fall.

## FIG_1

R₁  S₁  R₂  S₂  R₃  R₄  R₅  R₆

## FIG_2

R₁  S₁  R₂  R₃  S₂  S₃  R₄  R₅  R₆

## RÉFÉRENCES CITÉES DANS LA DESCRIPTION

**Documents brevets cités dans la description**

*   WO 0072183 A